# EUROPÄISCHE PATENTSCHRIFT

(11) **EP 2 572 392 B1**
(45) Veröffentlichungstag und Bekanntmachung des Hinweises auf die Patenterteilung: **31.12.2014**
(21) Anmeldenummer: 11718299.8
(22) Anmeldetag: 05.05.2011
(51) Int. Cl.: H02J 7/00, H01M 2/34, H01M 2/04, H01M 2/02, H01M 10/04

(54) **ANORDNUNG UND VERFAHREN ZUM SICHEREN ENTLADEN EINES ENERGIESPEICHERS**
SYSTEM AND METHOD FOR SAFELY DISCHARGING AN ENERGY STORE
DISPOSITIF ET PROCÉDÉ POUR DÉCHARGER DE MANIÈRE SÛRE UN ACCUMULATEUR D'ÉNERGIE

(30) Priorität: 18.05.2010 DE 102010020911
(43) Veröffentlichungstag der Anmeldung: 27.03.2013
(73) Patentinhaber: Zentrum für Sonnenenergie- und Wasserstoff-Forschung Baden-Württemberg Gemeinnützige Stiftung, 70565 Stuttgart (DE); Continental Automotive GmbH, 30165 Hannover (DE)
(72) Erfinder: DÖRING, Harry, 89275 Elchingen (DE); BRAZEL, Harald, 89075 Ulm (DE); WÖRZ, Michael, 89129 Langenau (DE); BÖSE, Olaf, 89233 Neu-Ulm (DE); SCHWEIGER, Ans-Georg, 13127 Berlin (DE)
(74) Vertreter: Ter Meer Steinmeister & Partner
(86) Internationale Anmeldenummer: PCT/EP2011/002248
(87) Internationale Veröffentlichungsnummer: WO 2011/144300

(56) Entgegenhaltungen:
- EP-A2- 1 083 619
- DE-A1- 4 139 469
- US-A1- 2003 027 036

## Beschreibung

Die Erfindung betrifft eine Anordnung und ein Verfahren zum sicheren Entladen eines Energiespeichers.
In Hybrid-, Plug-In Hybrid- und Elektrofahrzeugen werden üblicherweise elektrochemische Energiespeichersysteme als Komponenten zur Energiespeicherung eingesetzt. Diese elektrochemischen Energiespeichersysteme basieren zumeist auf der Nickel-metallhydrid (NiMH) oder Lithium-Ionen (Li-Ion) Technologie. Es können auch weitere Technologien als Energielieferanten und Speicher Anwendung finden, wie beispielsweise Doppelschichtkondensatoren, Blei-Säure- oder Nickel-Zink-Batterien oder auch luftatmende Batterien, die ein Zusammenwirken von Zink/Luft oder Lithium/Luft nutzen.

Hybridfahrzeuge weisen eine Verbrennungskraftmaschine, eine elektrische Maschine und einen oder mehrere elektrochemische Energiespeicher auf. Die gespeicherte Energiemenge erlaubt maximal ein rein elektrisches Fahren von wenigen Kilometern. Plug-ln Hybridfahrzeuge sind analog zu Hybridfahrzeugen aufgebaut, weisen jedoch einen größeren elektrochemischen Energiespeicher auf, der es ermöglicht größere Energiemengen zu speichern und eine rein elektrische Fahrweise auf mittleren Entfernungen erlaubt. Die eingesetzten elektrochemischen Energiespeicher können am Stromnetz aufgeladen werden.
Bei einem reinen Elektrofahrzeug wird die Antriebsleistung allein durch eine elektrische Maschine bereitgestellt. Die eingesetzten elektrochemischen Energiespeicher speichern üblicherweise Energiemengen, die eine Reichweite von mehr als 100 Kilometer erlauben.

Allen genannten Fahrzeugtypen ist gemein, dass große Mengen elektrischer Energie bereitgestellt und transferiert werden müssen. Die Sicherheit des Energiespeichers ist dabei einer der Schwerpunkte bei der Entwicklung von Li-Ion-Batterien, Dabei unterscheidet man zwischen der Sicherheit auf Zell- und Systemebene. Die Brandsicherheit auf Zellebene wird wesentlich durch die Wahl der Elektrolyte beeinflusst. Nach dem Stand der Technik werden in Li-Ion-Batterien Elektrolyte eingesetzt, die aus mindestens einem Lithium-Salz, gelöst in einer Mischung aus organischen Lösungsmitteln, meist linearen und zyklischen organischen Carbonaten oder auch Estern, bestehen. Alle derzeit eingesetzten Lösungsmittel sind entzündlich und brennbar und stellen deshalb eine hohe Brandlast dar.

Auch in anderen Energiespeichersystemen können brennbare Substanzen vorhanden sein bzw. gebildet werden. In Doppelschichtkondensatoren sind ebenfalls brennbare Elektrolyte auf der Basis von Acetonitril bzw. Propylencarbonat enthalten. Darüber hinaus kann in allen wässrigen Systemen wie beispielsweise in Blei-Säure- und Nickel-Zink-Batterien eine Bildung von brennbarem Wasserstoff nicht ausgeschlossen werden.

Die Sicherheit auf Systemebene wird üblicherweise durch Energiesteuerschaltungen inklusive Einzelzellüberwachung im bestimmungsgemäßen Betrieb sichergestellt. Eine solche Energiesteuerschaltung ermittelt den Ladezustand des Energiespeichers und steuert unter anderem Hauptschütze zum Zu- bzw. Abschalten des Energiespeichers. Des Weiteren regelt die Energiesteuerschaltung den Energiefluss, d.h. welche Energiemenge dem Speicher entnommen oder zugeführt werden soll.

Durch unsachgemäßen Gebrauch des Energiespeichers oder durch einen Unfall, wenn der Energiespeicher in einem Fahrzeug angeordnet ist, können der Energiespeicher und/oder die Energiesteuerschaltung beschädigt werden. Dadurch kann zum Beispiel ein Schalten der Hauptschütze nicht mehr möglich sein und als Folge davon gehen die Schütze in ihre Ruheposition, d.h. die Hauptschütze werden geöffnet. Jedoch liegt in den meisten Fällen weiterhin die vollständige Spannung an den Zellen des Energiespeichers an.

Nachteilig wirkt sich dabei in diesem Fall aus, dass der Energiespeicher dann von außen nicht mehr gezielt entladen werden kann. Durch die an dem Energiespeicher anliegende Spannung kann nun beispielsweise ein Potential auf ein beschädigtes Gehäuse gelangen, das eine Bergung der verunfallten Batterie behindert und Bergungspersonal gefährdet. Des Weiteren besteht die Möglichkeit, dass elektrische Kurzschlüsse den brennbaren Elektrolyten des Energiespeichers oder bei einem verunfallten Fahrzeug eventuell ausgelaufenen Kraftstoff entzünden.

Aufgabe der vorliegenden Erfindung ist es, eine Anordnung und ein Verfahren zum sicheren Entladen eines Energiespeichers anzugeben, insbesondere für den Fall, dass der Energiespeicher und/oder eine zugehörige, damit verbundene Energiesteuerschaltung durch Defekt oder Unfall beschädigt worden sind.

Die Aufgabe wird gelöst durch eine Anordnung gemäß Anspruch 1 und ein Verfahren gemäß Anspruch 20. Ausgestaltungen und Weiterbildungen des Erfindungsgedankens sind Gegenstand von Unteransprüchen.

Die Aufgabe wird insbesondere gelöst durch eine Energiespeicheranordnung mit einem Energiespeicher mit elektrischen Polen, über die der Energiespeicher zumindest entladbar ist, und einem elektrisch leitenden Leitmittel in Form eines Fluids oder feinkörnigen Schüttguts oder eines Gemisches aus beidem, wobei das Leitmittel aus einem Vorratsbehälter in einen Auffangbehälter abgegeben wird derart, dass die elektrischen Pole des Energiespeichers über das Leitmittel in dem Auffangbehälter unmittelbar oder mittelbar elektrisch leitend miteinander verbunden werden.

Die Aufgabe wird weiterhin gelöst durch ein Verfahren zum sicheren Entladen eines Energiespeichers, bei dem elektrisch leitfähiges Leitmittel in Form von Fluid oder feinkörnigem Schüttgut oder eines Gemisches aus beidem zwischen die elektrischen Pole und/oder oder damit elektrisch verbunden Leitungsteilen bei Auftreten eines bestimmten Ereignisses gebracht wird, so dass die elektrischen Pole des Energiespeichers und/oder die damit verbundenen elektrischen Leitungsteile durch das Leitmittel elektrisch leitend miteinander verbunden werden.

Die Erfindung wird nachfolgend anhand der in den Figuren der Zeichnungen dargestellten Ausführungsbeispiele näher erläutert, wobei gleiche Elemente mit gleichen Bezugszeichen versehen sind. Es zeigt:
- Figur 1: in einem Blockdiagramm eine Ausführungsform einer Energiespeicheranordnung zum sicheren Entladen eines Energiespeichers über ein Leitmittel;
- Figur 2: in einem Blockdiagramm die Energiespeicheranordnung gemäß Figur 1 nach dem Abgeben eines Leitmittels in einen am Energiespeicher angeordneten Auffangbehälter;
- Figur 3: in einem Blockdiagramm eine weitere Ausführungsform einer Energiespeicheranordnung nach dem Abgeben eines Leitmittels in einen an einer Energiesteuerschaltung angeordneten Auffangbehälter;
- Figur 4: in einem Blockdiagramm eine weitere Ausführungsform einer Energiespeicheranordnung nach dem Abgeben eines Leitmittels in einen um einen Teil elektrischer Verbindungsleitungen angeordneten Auffangbehälter;
- Figur 5: in einem Blockdiagramm eine weitere Ausführungsform einer Energiespeicheranordnung nach dem Abgeben eines Leitmittels über eine Rohrleitung in einen abgeschlossenen Auffangbehälter;
- Figur 6: in einem Blockdiagramm eine weitere Ausführungsform einer Energiespeicheranordnung nach dem Abgeben eines Leitmittels über eine Rohrleitung in einen abgeschlossenen Auffangbehälter;
- Figur 7: in einem Blockdiagramm eine weitere Ausführungsform einer Energiespeicheranordnung nach dem Abgeben eines Leitmittels über eine Rohrleitung in einen abgeschlossenen Auffangbehälter; und
- Figur 8: in einem Blockdiagramm eine weitere Ausführungsform einer Energiespeicheranordnung mit einem in einem geschlossenen Auffangbehälter angeordneten Vorratsbehälter für eine Leitmittel.

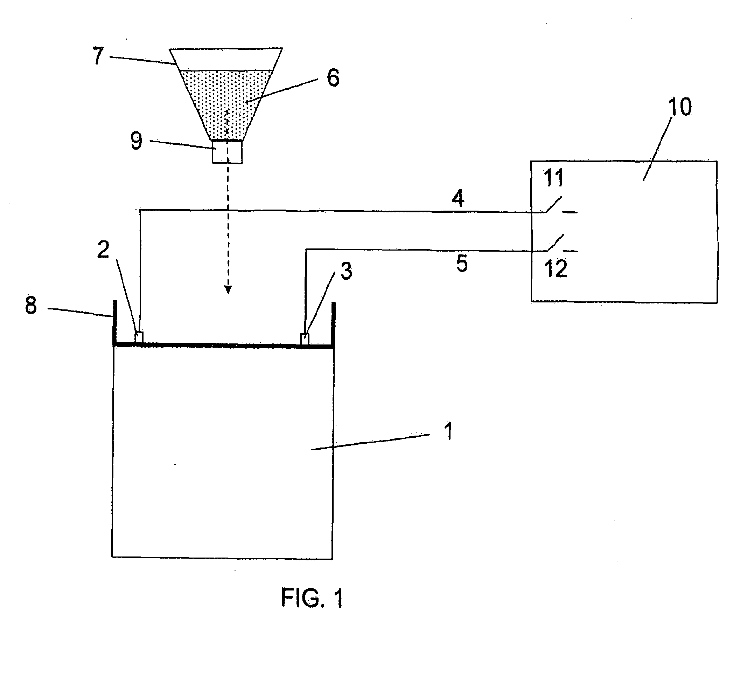

Figur 1 zeigt in einem Blockdiagramm eine Energiespeicheranordnung zum sicheren Entladen eines Energiespeichers 1 mit Polen 2 und 3 und damit verbundenen elektrischen Leitungen 4 und 5. Die Energiespeicheranordnung weist weiterhin einen ein Leitmittel 6 enthaltenden Vorratsbehälter 7, eine mit dem Vorratsbehälter 7 verbundene auslösbare Abgabevorrichtung 9, einen Auffangbehälter 8 und mit den elektrischen Leitungen 4 und 5 verbundene, durch die Energiesteuerschaltung 10 gesteuerte Schütze 11 und 12 auf.

Wie weiter oben beschrieben, können der Energiespeicher 1 und/oder die Energiesteuerschaltung 10 durch unsachgemäßen Gebrauch des Energiespeichers 1 oder durch einen Unfall, wenn der Energiespeicher 1 beispielsweise in einem Fahrzeug angeordnet ist, beschädigt werden. Dadurch kann zum Beispiel ein Schalten der Hauptschütze 11 und 12 in der Energiesteuerschaltung 10 nicht mehr möglich sein und als Folge davon gehen diese in ihre Ruheposition, d.h. die Hauptschütze 11 und 12 werden geöffnet. Weiterhin liegt jedoch die vollständige Spannung an den Polen des Energiespeichers an. Durch die an dem Energiespeicher 1 anliegende Spannung kann nun beispielsweise ein Potential an Fahrzeugteile gelangen, das eine Bergung behindert und Bergungspersonal gefährdet. Des Weiteren besteht die Möglichkeit, dass elektrische Kurzschlüsse den brennbaren Elektrolyten des Energiespeichers 1 oder bei einem verunfallten (Hybrid-) Fahrzeug eventuell ausgelaufenen Kraftstoff entzünden.

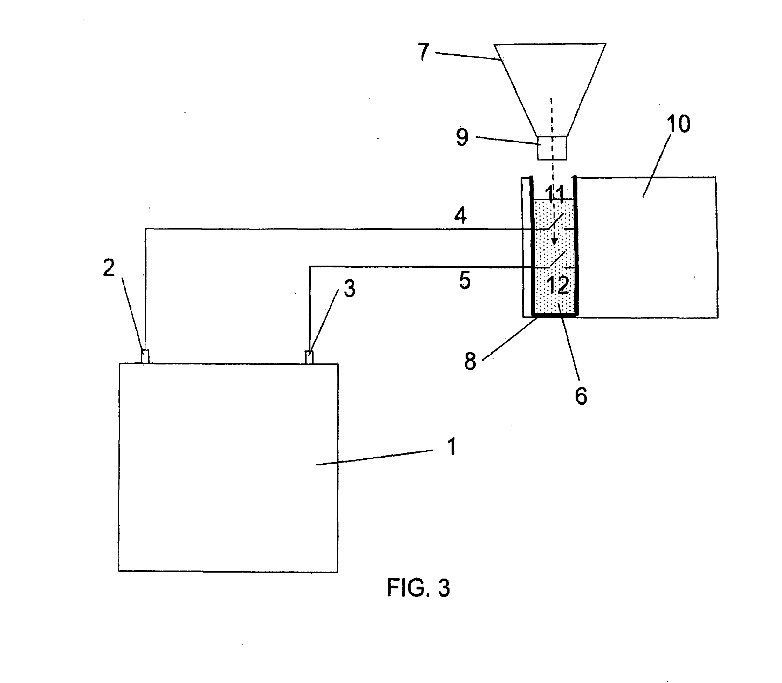

Der erfindungsgemäße Lösungsansatz sieht nun vor, beispielsweise analog zur Auslösung eines Airbags über die auslösbare Abgabevorrichtung 9 ein elektrisch leitendes Leitmittel in den als Auffangbehälter 8 dienenden Polraum der Zellen (siehe Figur 1) und/oder einen Raum um die Schütze 11 und 12 der Energiesteuerschaltung 10 (siehe Figur 3) abzugeben. Durch elektrisches Verbinden der Energiespeicherpole 2, 3 unmittelbar (oder mittelbar über die Leitungen 4, 5 und die Schütze 11, 12 der Energiesteuerschaltung 10) mittels des elektrisch leitenden Leitmittel 6 wird der Energiespeicher 1 kontrolliert entladen. Dabei sinkt das Gefährdungspotential kontinuierlich bzw. es besteht nach der vollständigen Entladung keine elektrische Gefährdung mehr durch den Energiespeicher 1.

Durch die Entladung des Energiespeichers 1 wird auch dessen inneres chemisches Potential entsprechend reduziert, so dass auch bei direkter Berührung der Elektroden im Inneren des Energiespeichers 1 (Separatorbruch, Penetration der Zellen beim Bergen usw.) ebenfalls keine Gefahr mehr von dem Energiespeicher 1 ausgeht. Der Energiespeicher 1 kann nach der vollständigen Entladung gefahrlos gehandhabt werden.

Das Leitmittel 6 kann Schäume, Gele, Pasten, Mikroemulsionen, Lösungen, Späne, Pulver oder Gries enthalten oder daraus bestehen. Das Leitmittel 6 weist zum Beispiel elektrisch leitfähiges Material und elektrisch nicht leitendes Material in einem bestimmten Verhältnis zueinander auf, wodurch eine erwünschte elektrische Leitfähigkeit des Leitmittels 6 eingestellt wird. Die elektrische Leitfähigkeit des Leitmittels 6 wird dabei so bemessen, dass die Entladung des Energiespeichers 1 nicht in zu kurzer Zeit auftritt, um eine zu hohe, unerwünschte Wärmeentwicklung bei der Entladung des Energiespeichers 1 zu vermeiden. Andererseits wird die elektrische Leitfähigkeit des Leitmittels 6 auch nicht zu klein gewählt, um eine für den jeweiligen Anwendungsfall erwünschte, möglichst kurze Entladungszeit des Energiespeichers 1 sicherzustellen.

Das Leitmittel 6 kann als elektrisch leitfähiges Material zum Beispiel dispergierten Graphit und als elektrisch nicht leitendes Material nicht leitende Polymere aufweisen. In einer weiteren Ausführungsform weist das Leitmittel 6 als elektrisch leitfähiges Material ein Salz auf, das in nicht leitendem Schaum, Gel, Paste, Mikroemulsion oder in einer nicht leitenden Flüssigkeit gelöst ist. Hier können zum Beispiel quartäre Mischungen aus Salz, Wasser, Öl und Tensid oder ternäre Mischungen aus Tensid, Wasser und einem Cosolvens eingesetzt werden oder das Leitmittel 6 kann in Wasser gelöste anionische oder kationischen Tenside aufweisen. Je nach Wahl des Tensids lässt sich ein Schaum, ein Gel, eine Paste oder eine Flüssigkeit darstellen.

Auch durch ausreichend feinkörnige Festkörper als Leitmittel 6 kann eine entsprechende Entladung des Energiespeichers 1 erreicht werden. Mögliche Formen hierfür sind zum Beispiel Pulver, Späne, Gries oder andere fein verteilte Zubereitungen. Mögliche Materialien sind Graphit, Kohlenstoff, leitfähige Polymere, Halbmetalle oder schlecht leitende Legierungen. Das Leitmittel 6 kann auch in Form einer feinkörnigen Schüttgutmischung ausgeführt werden, das beispielsweise ein leitfähiges oder mittelleitfähiges Polymer oder eine leitfähige Legierung aufweist.

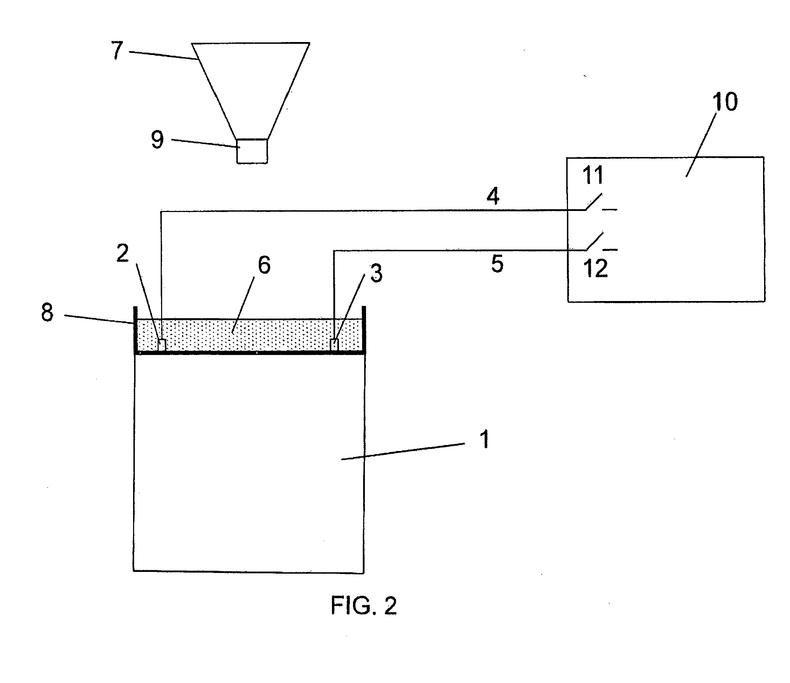

Figur 2 zeigt die Energiespeicheranordnung gemäß Figur 1 nach dem Abgeben des Leitmittels 6 in den am Energiespeicher 1 angeordneten Auffangbehälter 8 (angedeutet durch den Pfeil in Figur 1). Durch das Leitmittel 6 werden die Pole 2 und 3 des Energiespeichers 1 und beispielsweise auch Teile der Leitungen 4 und 5 elektrisch leitend miteinander verbunden, wodurch der erwünschte Entladevorgang des Energiespeichers 1 mit einem durch die eingestellte Leitfähigkeit des Leitmittels 6 vorgegebenen Entladestrom erfolgt.

In der Ausführungsform gemäß Figur 1 und Figur 2 ist das Leitmittel 6 in einem von dem Auffangbehälter 8 getrennt ausgeführten und angeordneten Vorratsbehälter 7, also in einem separaten Bauraum untergebracht. Der Vorratsbehälter 7 weist eine mit diesem verbundene, auslösbare Abgabevorrichtung 9 auf, mittels der bei einer Auslösung das Leitmittel 6 von dem Vorratsbehälter 7 in den Auffangbehälter 8 abgegeben wird. Das Abgeben des Leitmittels 6 erfolgt derart, dass die elektrischen Pole des Energiespeichers 1 über das Leitmittel 6 elektrisch leitend miteinander verbunden werden. Das Auslösen der Abgabevorrichtung 9 kann dabei manuell erfolgen oder direkt oder indirekt als Reaktion auf ein Ereignis. Die Abgabevorrichtung 9 kann zu diesem Zweck beispielsweise als ein manuell betätigbares oder ein zum Beispiel elektrisch gesteuertes Ventil ausgeführt sein.

Für einen Fall, in dem der Energiespeicher 1 zum Beispiel Teil eines Hybrid-, Plug-In Hybrid oder Elektrofahrzeugs ist, kann ein solches Ereignis eine Beschädigung der Energiesteuerschaltung 10 und/oder des Energiespeichers 1 sein, beispielsweise als Folge eines Fahrzeugunfalls. Eine solche Beschädigung kann zum Beispiel durch entsprechende Sensoren festgestellt werden und damit mittelbar eine Auslösung der Abgabevorrichtung 9 veranlassen. In einer anderen Ausführungsform kann die Abgabevorrichtung 9 selbst über eine Vorrichtung, wie zum Beispiel einen eigenen Crash-Sensor gegebenenfalls in Verbindung mit Mikrosprengladungen wie etwa bei Airbags verfügen, die die Abgabe des Leitmittels 6 von dem Vorratsbehälter 7 in den Auffangbehälter 8 unmittelbar auslöst. Alternativ dazu kann auch eine Sollbruchstelle an der Verbindung zwischen dem Vorratsbehälter 7 und dem Auffangbehälter 8 vorgesehen sein, über die dann die Abgabe des Leitmittels 6 in den Auffangbehälter 8 erfolgt.

Figur 3 zeigt eine Energiespeicheranordnung gemäß Figur 1 und Figur 2, bei der der Auffangbehälter 8 nicht am Energiespeicher 1 angeordnet ist, sondern bei der Energiesteuerschaltung 10. Dies kann zum Beispiel dann vorteilhaft sein, wenn direkt am Energiespeicher 1 kein ausreichender Bauraum zur Verfügung steht oder wenn aus Kostengründen ein Wechseln des Energiespeichers 1 nicht auch das Wechseln des Auffangbehälters 8 oder einen Umbau von diesem auf den neuen Energiespeicher beinhalten soll. Analog zu dem Verfahren gemäß Figur 1 und Figur 2 wird hier wiederum das Leitmittel 6 in den Auffangbehälter 8 abgegeben.

Der Auffangbehälter 8 umschließt hier jedoch einige oder alle elektrischen Kontaktstellen der Energiesteuerschaltung 10 und zum Beispiel auch die Schütze 11 und 12. Diese werden durch das aus dem entsprechend angeordneten Vorratsbehälter 8 abgegebenen Leitmittel 6 elektrisch leitend miteinander verbunden, wodurch wiederum der mittels der elektrischen Verbindungsleitungen 4 und 5 verbundene Energiespeicher 1 entladen wird.

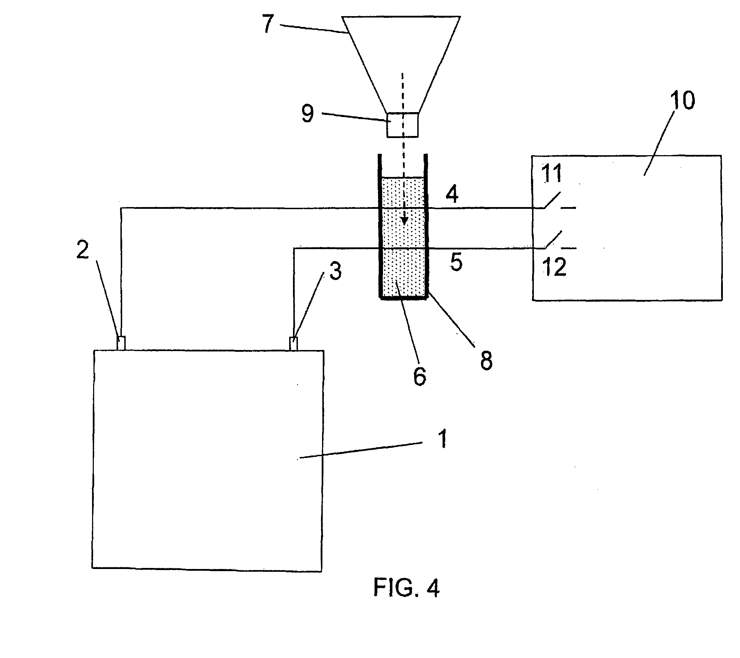

In einer weiteren Ausführungsform ist der Auffangbehälter 8 zwischen dem Energiespeicher 1 und der Energiesteuerschaltung 10 so angeordnet sein, dass er ausschließlich Teilbereiche der elektrischen Verbindungsleitungen 4 und 5 umfasst. Ein entsprechendes Beispiel ist in Figur 4 dargestellt, wobei die Bereiche der elektrischen Verbindungsleitungen 4 und 5, die durch den Auffangbehälter 8 verlaufen, zumindest zum Teil nicht elektrisch isoliert ausgeführt sind, so dass das von dem Vorratsbehälter 7 in den Auffangbehälter 8 abgegebene Leitmittel 6 die mit an Polen 2 und 3 des Energiespeichers 1 angeschlossenen Verbindungsleitungen 4 und 5 elektrisch miteinander verbindet und dadurch den Energiespeicher 1 sicher entlädt.

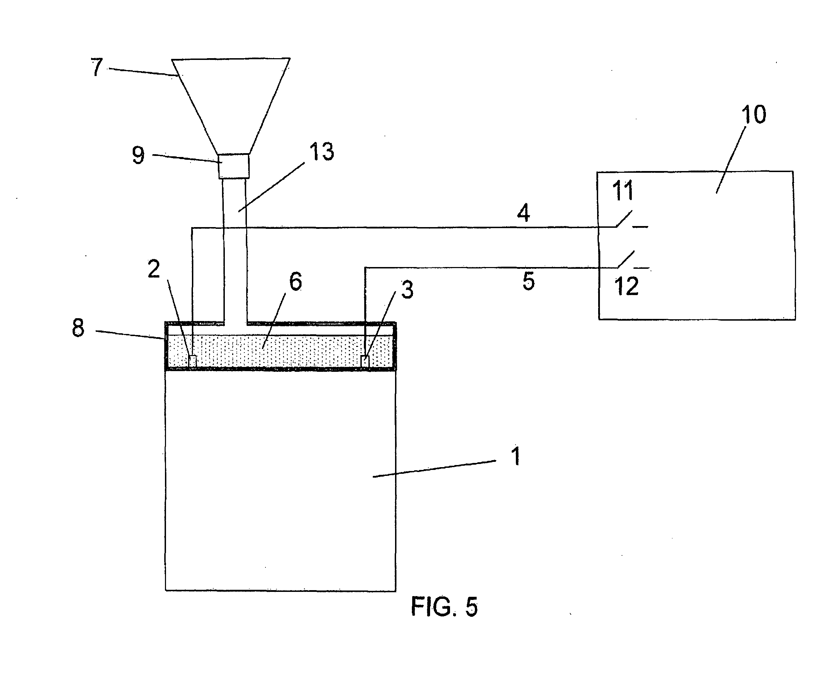

Figur 5 zeigt ein weiteres Ausführungsbeispiel, bei dem die Anordnung einen gegenüber der Umgebung abgeschlossenen, zum Beispiel um die Pole des Energiespeichers 1 herum angeordneten und somit die Pole 3 und 4 und/oder Teile der elektrischen Verbindungsleitungen 4 und 5 umfassenden Auffangbehälter 8 aufweist, der über eine zusätzliche Rohrleitung 13 mit der z. B. durch einen Crash-Sensor 14 auslösbaren Abgabevorrichtung 9 wie z.B. einem Ventil oder einer Pumpe und dem Vorratsbehälter 7 für das Leitmittel 6 verbunden ist. Auf diese Weise ergibt sich eine nach außen geschlossene Anordnung, wodurch ein unerwünschtes Austreten von Leitmittel 6 in andere Bereiche als den Auffangbehälter 8 vermieden wird, wenn gleichzeitig der Vorratsbehälter 7 ebenfalls als abgeschlossenes Behältnis ausgeführt ist. Eine ähnliche Ausführungsform einer gegen die Umgebung abgeschlossenen Anordnung ist alternativ auch für die in den Figuren 1 bis 4 gezeigten Anordnungen möglich.

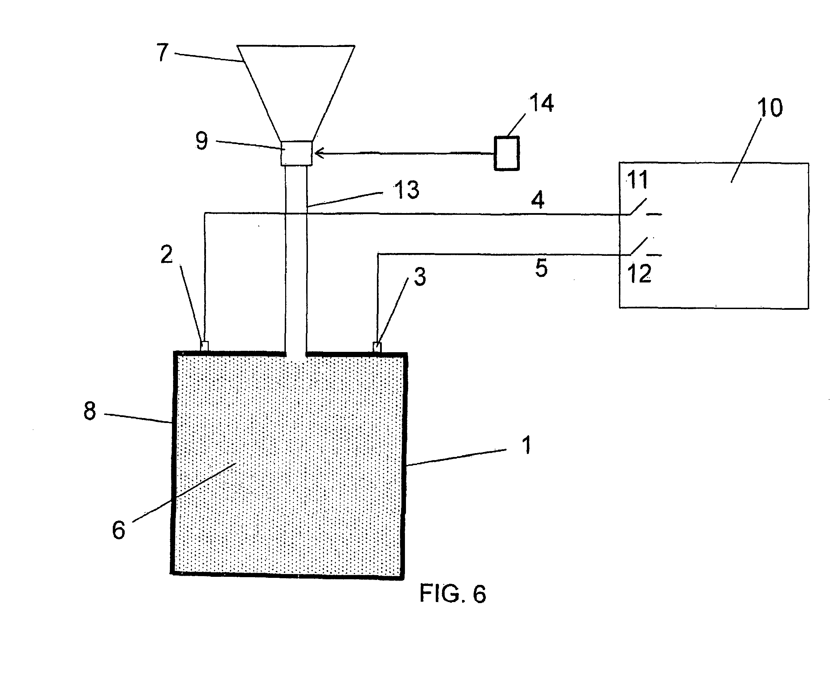

Figur 6 zeigt ein Ausführungsbeispiel, bei dem der Energiespeicher 1 ein abgeschlossenes Gehäuse aufweist und das Gehäuse als Auffangbehälter 8 dient, der über eine Rohrleitung 13 mit der auslösbaren Abgabevorrichtung 9 und dem Vorratsbehälter 7 für das Leitmittel 6 verbunden ist. Bei Auslösen der Abgabevorrichtung 9 wird das Leitmittel 6 daher direkt in den Energiespeicher 1 abgegeben und die kontrollierte Entladung des Energiespeichers 1 erfolgt durch elektrisch leitende Verbindung interner Komponenten des Energiespeichers 1, wie zum Beispiel einer Vielzahl von in dem Energiespeicher 1 angeordneten Ladung tragenden Elementen unterschiedlichen elektrischen Potentials (z. B. Elektroden).

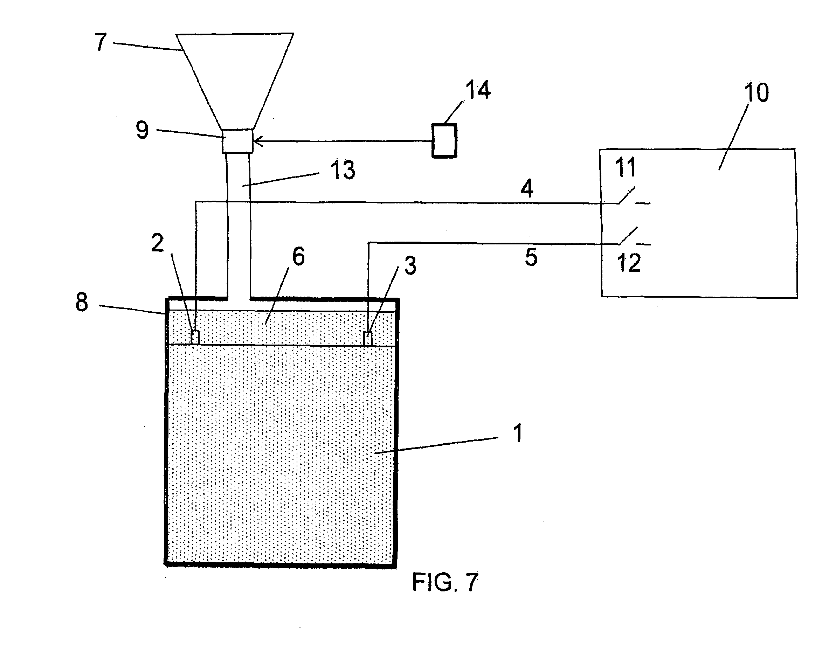

Figur 7 zeigt ein Ausführungsbeispiel, bei dem der Energiespeicher 1 ein abgeschlossenes Gehäuse aufweist, das Gehäuse den Energiespeicher 1 und die Pole 2 und 3 und/oder Teile der elektrischen Verbindungsleitungen 11 und 12 umgibt und das Gehäuse als Auffangbehälter 8 vorgesehen ist, das über eine Rohrleitung 13 mit der auslösbaren Abgabevorrichtung 9 wie z.B. einem Ventil oder einer Pumpe sowie dem Vorratsbehälter 7 für das Leitmittel 6 verbunden ist. Beim Auslösen der Abgabevorrichtung 9 durch einen Crash-Sensor 14 mit zugehöriger Auswerte- und Steuerelektronik wird das Leitmittel 6 daher direkt in den Energiespeicher 1 und in den Raum um die Pole 2 und 3 und/oder Teile der elektrischen Verbindungsleitungen 11 und 12 abgegeben.

Die kontrollierte Entladung des Energiespeichers 1 erfolgt durch elektrisch leitende Verbindung interner Komponenten des Energiespeichers 1, wie zum Beispiel einer Vielzahl von in dem Energiespeicher 1 angeordneten Ladung tragenden Elementen unterschiedlichen elektrischen Potentials, und durch elektrisch leitende Verbindung der Pole 2 und 3 und/oder Teile der elektrischen Verbindungsleitungen 11 und 12. Dadurch wird der resultierende Entladestrom auf eine Vielzahl durch das Leitmittel 6 ausgeführte elektrische Verbindungen aufgeteilt, wodurch eine unerwünschte lokal eng begrenzte Erwärmung durch die Entladung vermieden wird.

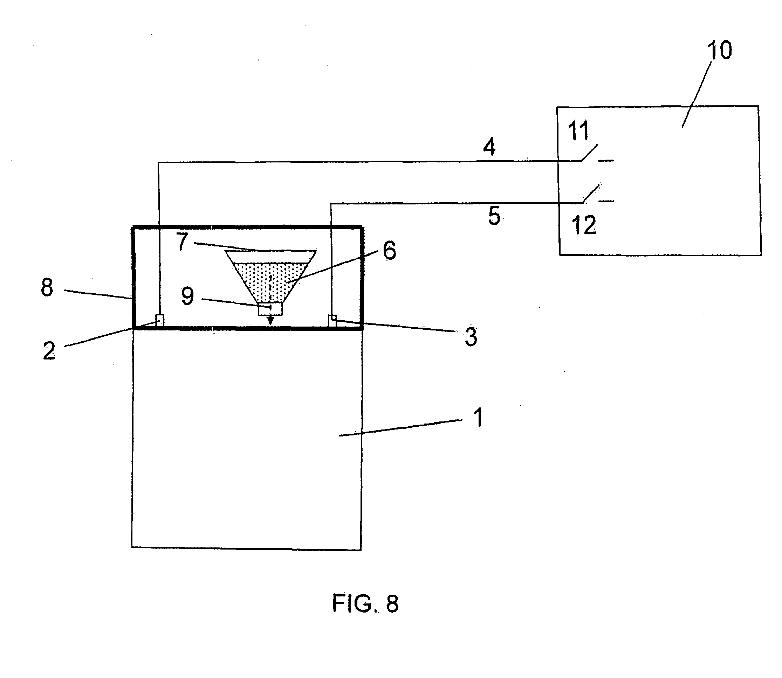

Figur 8 zeigt ein Ausführungsbeispiel, bei dem der Vorratsbehälter 7 innerhalb des gegenüber der Umgebung abgeschlossenen Auffangbehälters 8 angeordnet ist. Eine solche Anordnung ist auch für die in den Figuren 1 bis 7 gezeigten Ausführungsformen möglich. Vorteilhaft entfällt dadurch eine eventuelle Rohrverbindung 13 zwischen dem Vorratsbehälter 7 und dem Auffangbehälter 8 und ein unerwünschtes Austreten des Leitmittels 6 in andere Bereiche als den Auffangbehälter 8, beispielsweise bei nicht gegen die Umgebung abgeschlossenen Anordnungen, wird vermieden.

Das Leitmittel 6 kann in verschiedenen Ausführungsformen von Vorratsbehältern 7 im, am oder in der Nähe des Energiespeichers 1 oder der Energiesteuerschaltung 10 vorgehalten werden. Als mögliche Ausführungsformen der Lagerung zu nennen sind hier beispielhaft Kapseln, Kammern, Zylinder oder Behältnisse 7 hinter Trennwänden, die einen Durchbruch oder eine Sollbruchstelle zwischen zwei Bereichen aufweisen. Ist der Vorratsbehälter 7 in Verbindung mit der auslösbaren Abgabevorrichtung 9 im nicht ausgelösten Zustand selbst als geschlossenes System ausgeführt, kann der Vorratsbehälter 7 zusätzlich mit einem Entlademedium (zum Beispiel einem unter Druck stehendes Gas) befüllt sein, um beim Auslösen der Abgabevorrichtung 9 eine rasche, vollständige und sichere Abgabe des Leitmittels 6 sicherzustellen.

## Patentansprüche

1. Energiespeicheranordnung mit
einem Energiespeicher (1) mit elektrischen Polen (2, 3), über die der Energiespeicher (1) zumindest entladbar ist,
einem elektrisch leitenden Leitmittel (6) in Form eines Fluids oder feinkörnigen Schüttguts oder eines Gemisches aus beidem,
einem mit dem Leitmittel (6) befüllten Vorratsbehälter (7),
einem zur Aufnahme des Leitmittels (6) vorgesehenen Auffangbehälter (8), und
einer auslösbaren Abgabevorrichtung (9), mittels der bei Auslösung Leitmittel (6) von dem Vorratsbehälter (7) in den Auffangbehälter (8) abgegeben wird derart,
dass die elektrischen Pole (2, 3) des Energiespeichers (1) über das Leitmittel (6) in dem Auffangbehälter (8) unmittelbar oder mittelbar elektrisch leitend miteinander verbunden werden.

2. Anordnung nach Anspruch 1, bei der die Pole (2, 3) mit elektrischen Leitungen (4, 5) verbunden sind und die elektrischen Pole (2, 3) des Energiespeichers (1) über das Leitmittel (6) direkt und/oder indirekt über das Leitmittel (6) und zumindest Teilen der Leitungen (4, 5) elektrisch leitend miteinander verbunden werden.

3. Anordnung nach Anspruch 1 oder 2, bei der das Leitmittel (6) Schäume, Gele, Pasten, Mikroemulsionen, Lösungen, Späne, Pulver oder Gries enthält oder daraus besteht.

4. Anordnung nach Anspruch 1, 2 oder 3, bei der das Leitmittel (6) elektrisch leitfähiges Material und elektrisch nicht leitendes Material in einem bestimmten Verhältnis zueinander aufweist.

5. Anordnung nach Anspruch 4, bei der das Leitmittel (6) als elektrisch leitfähiges Material dispergierten Graphit und als elektrisch nicht leitendes Material nicht leitende Polymere aufweist.

6. Anordnung nach Anspruch 4, bei der das Leitmittel (6) als elektrisch leitfähiges Material ein Salz aufweist, das in nicht leitendem Schaum, Gel, Paste, Mikroemulsion oder in einer nicht leitenden Flüssigkeit gelöst ist.

7. Anordnung nach Anspruch 1 oder 2, bei der das Leitmittel (6) in Wasser gelöste anionische oder kationischen Tenside aufweist.

8. Anordnung nach Anspruch 7, bei der das Leitmittel (6) zusätzlich ein Salz oder ein Öl oder beides aufweist.

9. Anordnung nach Anspruch 8, bei der das Leitmittel (6) ein leitfähiges Polymer oder eine leitfähige Legierung in Form feinkörnigen Schüttgutes aufweist.

10. Anordnung nach einem der Ansprüche 1 bis 9, bei der der Auffangbehälter (8) im, am oder um den Energiespeicher (1) herum angeordnet ist und das abgegebene Leitmittel (6) die elektrischen Pole (2, 3) des Energiespeichers (1) leitend miteinander verbindet.

11. Anordnung nach einem der Ansprüche 1 bis 10, bei der die Energiespeicheranordnung eine Energiesteuerschaltung (10) aufweist, die mit den Leitungen (4, 5) elektrisch verbunden ist, und
der Auffangbehälter (8) in, an oder um die Energiesteuerschaltung (10) herum angeordnet ist derart,
dass das Leitmittel (6) beim Auslösen der Abgabevorrichtung (9) zumindest Teile der elektrischen Leitungen (4, 5) und/oder damit elektrisch verbundene Schaltkontakte der Energiesteuerschaltung (10) elektrisch miteinander verbindet.

12. Anordnung nach einem der Ansprüche 1 bis 9, bei der der Energiespeicher (1) ein Gehäuse aufweist und das Gehäuse als Auffangbehälter (8) vorgesehen ist.

13. Anordnung nach einem der Ansprüche 1 bis 9, bei der als Auffangbehälter (8) ein den Energiespeicher (1) und die Pole (2, 3) des Energiespeichers (1) umschließender Behälter vorgesehen ist.

14. Anordnung nach einem der Ansprüche 1 bis 12, bei der der Vorratsbehälter (7) innerhalb des Auffangbehälters (8) angeordnet ist.

15. Anordnung nach einem der Ansprüche 1 bis 14, bei der der Vorratsbehälter (7) räumlich oberhalb des Auffangbehälters (8) angeordnet ist

16. Anordnung nach einem der Ansprüche 1 bis 15, bei der die Abgabevorrichtung (9) das Leitmittel (6) durch ein gesteuertes Ventil oder eine Sollbruchstelle an den Auffangbehälter (8) abgibt.

17. Anordnung nach einem der Ansprüche 1 bis 16, bei der das Auslösen der Abgabevorrichtung (9) bei Auftreten eines bestimmten Ereignisses erfolgt.

18. Anordnung nach Anspruch 17, bei der das auslösende Ereignis eine Beschädigung des Energiespeichersteuerungssystems und/oder des Energiespeichers (1) ist.

19. Anordnung nach Anspruch 17, bei der der das auslösende Ereignis ein Unfall eines Kraftfahrzeuges ist.

20. Verfahren zum sicheren Entladen eines elektrische Pole (2, 3) aufweisenden Energiespeichers (1), bei dem elektrisch leitfähiges Leitmittel (6) in Form von Fluid oder feinkörnigem Schüttgut oder eines Gemisches aus beidem zwischen die elektrischen Pole (2, 3) und/oder damit elektrisch verbunden Leitungsteilen gebracht wird bei Auftreten eines bestimmten Ereignisses, so dass die elektrischen Pole (2, 3) des Energiespeichers (1) und/oder die damit verbundenen elektrischen Leitungsteile durch das Leitmittel (6) elektrisch leitend miteinander verbunden werden.

## Claims

1. Energy storage arrangement having
an energy accumulator (1) with electric poles (2, 3) via which the energy accumulator (1) can be at least discharged,
an electrically conductive conductor medium (6) in the form of a fluid or fine-grained bulk material or a mixture of both,
a reservoir container (7) which is filled with the conductor medium (6),
a collecting container (8) which is provided for accommodating the conductor medium (6), and
a triggerable discharging device (9), by means of which, in the case of triggering, conductor medium (6) is discharged from the reservoir container (7) into the collecting container (8) such
that the electric poles (2, 3) of the energy accumulator (1) are directly or indirectly connected to one another in an electrically conductive fashion via the conductor medium (6) in the collecting container (8).

2. Arrangement according to Claim 1, in which the poles (2, 3) are connected to electric lines (4, 5), and the electric poles (2, 3) of the energy accumulator (1) are connected to one another in an electrically conductive fashion, directly via the conductor medium (6) and/or indirectly via the conductor medium (6) and at least parts of the lines (4, 5).

3. Arrangement according to Claim 1 or 2, in which the conductor medium (6) contains foams, gels, pastes, micro-emulsions, solutions, chips, powder or grit or is composed thereof.

4. Arrangement according to Claim 1, 2 or 3, in which the conductor medium (6) has electrically conductive material and electrically non-conductive material in a specific ratio with respect to one another.

5. Arrangement according to Claim 4, in which the conductor medium (6) has dispersed graphite as the electrically conductive material and non-conductive polymers as the electrically non-conductive material.

6. Arrangement according to Claim 4, in which the conductor medium (6) has, as an electrically conductive material, a salt which is dissolved in a non-conductive foam, gel, paste, microemulsion or in a non-conductive fluid.

7. Arrangement according to Claim 1 or 2, in which the conductor medium (6) has anionic or cationic surfactants dissolved in water.

8. Arrangement according to Claim 7, in which the conductor medium (6) additionally has a salt or an oil or both.

9. Arrangement according to Claim 8, in which the conductor medium (6) has a conductive polymer or a conductive alloy in the form of fine-grained bulk material.

10. Arrangement according to one of Claims 1 to 9, in which the collecting container (8) is arranged in, on or around the energy accumulator (1), and the conductor medium (6) which is discharged connects the electric poles (2, 3) of the energy accumulator (1) to one another in a conductive fashion.

11. Arrangement according to one of Claims 1 to 10, in which
the energy storage arrangement has an energy control circuit (10) which is electrically connected to the lines (4, 5), and
the collecting container (8) is arranged in, on or around the energy control circuit (10) such
that, in the case of triggering of the discharging device (9), the conductor medium (6) electrically connects to one another at least parts of the electric lines (4, 5) and/or switching contacts of the energy control circuit (10) which are electrically connected thereto.

12. Arrangement according to one of Claims 1 to 9, in which the energy accumulator (1) has a housing, and the housing is provided as a collecting container (8).

13. Arrangement according to one of Claims 1 to 9, in which a container which encloses the energy accumulator (1) and the poles (2, 3) of the energy accumulator (1) is provided as a collecting container (8).

14. Arrangement according to one of Claims 1 to 12, in which the reservoir container (7) is arranged inside the collecting container (8).

15. Arrangement according to one of Claims 1 to 14, in which the reservoir container (7) is arranged spatially above the collecting container (8).

16. Arrangement according to one of Claims 1 to 15, in which the discharging device (9) discharges the conductor medium (6) to the collecting container (8) through a controlled valve or a predetermined break point.

17. Arrangement according to one of Claims 1 to 16, in which the triggering of the discharging device (9) takes place when a specific event occurs.

18. Arrangement according to Claim 17, in which the triggering event is damage to the energy accumulator control system and/or to the energy accumulator (1).

19. Arrangement according to Claim 17, in which the triggering event is an accident of a motor vehicle.

20. Method for safely discharging an energy accumulator (1) having electric poles (2, 3), in which method, when a specific event occurs, electrically conductive conductor medium (6) in the form of fluid or fine-grained bulk material or a mixture of both is placed between the electric poles (2, 3) and/or line parts which are electrically connected thereto, with the result that the electric poles (2, 3) of the energy accumulator (1) and/or the electric line parts which are connected thereto are connected to one another in an electrically conductive fashion by the conductor medium (6).

## Revendications

1. Dispositif d'accumulation d'énergie avec
un accumulateur d'énergie (1) avec des pôles électriques (2, 3) par l'intermédiaire desquels l'accumulateur d'énergie (1) peut au moins être déchargé,
un moyen conducteur électro-conducteur (6) sous la forme d'un fluide ou d'un matériau en vrac à grain fin ou d'un mélange des deux,
un réservoir (7) rempli avec le moyen conducteur (6), un récipient collecteur (8) prévu pour recevoir le moyen conducteur (6), et
un dispositif de transfert déclenchable (9) grâce auquel, lors du déclenchement, le moyen conducteur (6) est transféré par le réservoir (7) dans le récipient de collecte (8) de manière à ce que,
les pôles électriques (2, 3) de l'accumulateur d'énergie (1) sont reliés ensemble de manière électro-conductrice, directement ou indirectement, par l'intermédiaire du moyen conducteur (6) dans le récipient collecteur (8).

2. Dispositif selon la revendication 1, dans lequel les pôles (2, 3) sont reliés avec des lignes électriques (4, 5), et les pôles électriques (2, 3) de l'accumulateur d'énergie (1) étant reliés ensemble de manière électro-conductrice directement par l'intermédiaire du moyen conducteur (6) et/ou indirectement par l'intermédiaire du moyen conducteur (6) et au moins des parties des lignes (4, 5).

3. Dispositif selon la revendication 1 ou 2, dans lequel le moyen conducteur (6) contient des mousses, gels, pâtes, microémulsions, solutions, copeaux, poudres ou sable grossier ou se compose de ceux-ci.

4. Dispositif selon la revendication 1, 2 ou 3, dans lequel le moyen conducteur (6) présente un matériau électro-conducteur et un matériau non électro-conducteur selon un certain rapport proportionnel l'un par rapport à l'autre.

5. Dispositif selon la revendication 4, dans lequel le moyen conducteur (6) présente du graphite dispersé en tant que matériau électro-conducteur et des polymères non conducteurs en tant que matériau non électro-conducteur.

6. Dispositif selon la revendication 4, dans lequel le moyen conducteur (6) présente un sel en tant que matériau électro-conducteur, lequel est dissout dans une mousse, un gel, une pâte, une microémulsion non conducteurs ou dans un liquide non conducteur.

7. Dispositif selon la revendication 1 ou 2, dans lequel le moyen conducteur (6) présente des agents tensioactifs anioniques ou cationiques dissous dans l'eau.

8. Dispositif selon la revendication 7, dans lequel le moyen conducteur (6) présente additionnellement un sel ou une huile ou les deux.

9. Dispositif selon la revendication 8, dans lequel le moyen conducteur (6) présente un polymère conducteur ou un alliage conducteur sous la forme d'un matériau en vrac à grain fin.

10. Dispositif selon l'une des revendications 1 à 9, dans lequel le récipient collecteur (8) est disposé dans l'accumulateur d'énergie (1), sur celui-ci ou autour de celui-ci, et le moyen conducteur (6) transféré reliant ensemble de manière conductrice les pôles électriques (2, 3) de l'accumulateur d'énergie (1).

11. Dispositif selon l'une des revendications 1 à 10, dans lequel
le dispositif d'accumulation d'énergie présente un circuit de commande d'énergie (10), lequel est relié électriquement aux lignes (4, 5), et
le récipient collecteur (8) étant disposé dans le circuit de commande d'énergie (10), sur celui-ci ou autour de celui-ci de manière à ce que
lors du déclenchement du dispositif de transfert (9), le moyen conducteur (6) relie électriquement ensemble au moins des parties des lignes électriques (4, 5) et/ou des contacts de commutation, en liaison électrique avec celles-ci, du circuit de commande d'énergie (10).

12. Dispositif selon l'une des revendications 1 à 9, dans lequel l'accumulateur d'énergie (1) présente un boîtier, et le boîtier étant prévu en tant que récipient collecteur (8).

13. Dispositif selon l'une des revendications 1 à 9, dans lequel on prévoit, en guise de récipient collecteur (8), un récipient enfermant l'accumulateur d'énergie (1) et les pôles (2, 3) de l'accumulateur d'énergie (1).

14. Dispositif selon l'une des revendications 1 à 12, dans lequel le réservoir (7) est disposé à l'intérieur du récipient collecteur (8).

15. Dispositif selon l'une des revendications 1 à 14, dans lequel le réservoir (7) est disposé spatialement au-dessus du récipient collecteur (8).

16. Dispositif selon l'une des revendications 1 à 15, dans lequel le dispositif de transfert (9) transfère le moyen conducteur (6) grâce à une soupape commandée ou un point destiné à la rupture sur le récipient collecteur (8).

17. Dispositif selon l'une des revendications 1 à 16, dans lequel le déclenchement du dispositif de transfert (9) s'effectue lors de l'apparition d'un évènement déterminé.

18. Dispositif selon la revendication 17, dans lequel l'évènement déclencheur est un endommagement du système de commande de l'accumulateur d'énergie et/ou de l'accumulateur d'énergie (1).

19. Dispositif selon la revendication 17, dans lequel l'évènement déclencheur est un accident d'un véhicule automobile.

20. Procédé pour la décharge sûre d'un accumulateur d'énergie (1) présentant des pôles électriques (2, 3), dans lequel un matériau conducteur électro-conducteur (6), sous forme de fluide ou d'un matériau en vrac à grain fin ou d'un mélange des deux, est amené entre les pôles électriques (2, 3) et/ou des parties de lignes en liaison électrique avec ceux-ci, en cas d'apparition d'un évènement déterminé, de sorte que les pôles électriques (2, 3) de l'accumulateur d'énergie (1) et/ou les parties de ligne en liaison électrique avec ceux-ci, sont reliés ensemble de manière électro-conductrice grâce au moyen conducteur (6).
